# FASCICULE DE BREVET EUROPEEN

(11) **EP 0 864 016 B1**
(45) Date de publication et mention de la délivrance du brevet: **10.03.1999**
(21) Numéro de dépôt: 96939990.6
(22) Date de dépôt: 28.11.1996
(51) Int. Cl.: E01C 19/20, E01C 21/00, A01C 15/00

(54) **EPANDEUR POUR TRAITEMENT DE TERRAIN**
STREUVORRICHTUNG ZUM BEHANDELN VON BÖDEN
SPREADER FOR TREATING SOIL

(30) Priorité: 28.11.1995 FR 9514072
(43) Date de publication de la demande: 16.09.1998
(73) Titulaire: MEDINGER, Jean-Claude, F-92340 Bourg-la-Reine (FR)
(72) Inventeur: MEDINGER, Jean-Claude, F-92340 Bourg-la-Reine (FR)
(74) Mandataire: Chaillot, Geneviève
(86) Numéro de dépôt international: FR9601890
(87) Numéro de publication internationale: WO9720109

(56) Documents cités:
- EP-A- 0 462 899
- DE-U- 8 912 990
- FR-A- 1 441 641
- FR-A- 2 359 452
- GB-A- 2 028 777
- US-A- 3 598 027

## Description

La présente invention se rapporte aux épandeurs qui permettent de traiter un terrain, plus particulièrement en répandant sur celui-ci des produits destinés à améliorer ses caractéristiques, notamment ses caractéristiques mécaniques, afin en particulier de pouvoir effectuer dessus d'autres travaux.

On sait que pour construire par exemple une route ou un parking, il est très rare de pouvoir déposer directement les matériaux nécessaires sur le sol brut. Outre des opérations d'aménagement ou de décapage, il est souvent nécessaire de traiter ce sol en épandant dessus un produit tel que de la chaux ou du ciment et en effectuant ensuite un malaxage de ces matériaux avec le matériau d'origine du sol. Ces techniques de traitement du sol se sont largement développées ces dernières années. Elles sont amenées à connaître un développement important en particulier dans les zones tempérées humides parce qu'elles permettent de corriger la teneur en eau des sols, par exemple par un apport de chaux vive. En outre, et éventuellement en complément de cet apport, dans les zones où les agrégats sont rares il est plus économique d'effectuer un apport de ciment qui permet de réaliser directement une couche de fondation.

Les matériels actuellement connus pour effectuer ce genre de traitement sont en particulier décrits dans la demande de brevet européen EP-A-0462899, ainsi que dans la norme française NFP98-712.

On connaît ainsi du brevet FR-A-1 441 641 (NORMIDI) un épandeur qui comprend une trémie qui fait office de silo et un doseur recevant le produit depuis la trémie et l'épandant sur le sol. L'ensemble trémie/doseur est solidaire du châssis d'un véhicule porteur qui peut être soit tracté soit automoteur, et il est attaché de manière fixe sur le châssis de ce véhicule porteur. Cet ensemble est donc fixé à une hauteur relativement grande au dessus du sol et le distributeur ne saurait ainsi permettre d'obtenir une bonne régularité de l'épandage et une absence de dispersion des produits à épandre dans l'atmosphère, même si des jupes en caoutchouc situées autour de l'orifice de sortie du matériau permettent plus ou moins de limiter les effets du vent.

Malgré les nombreuses tentatives d'amélioration de ces appareils, dont la norme française citée ci-dessus donne une bonne synthèse, ces engins ont connu un essor très limité. En conséquence, et malgré ces améliorations, la technique de l'épandage est loin d'être arrivée à un niveau de perfectionnement satisfaisant et les défauts concernant en particulier les inégalités de dispersion longitudinale et transversale sont toujours présents à un niveau qui est souvent dissuasif.

Un inconvénient qui prend de plus en plus d'importance en raison de l'évolution des mentalités concernant la dispersion de poussières, qui vient nuire gravement à la protection de l'environnement et au bien être des personnes travaillant sur le chantier ou habitant à proximité. Cet inconvénient est maintenant perçu de manière si importante qu'il entraîne souvent l'arrêt du chantier, par exemple en présence de vent qui entraîne les poussières à une distance plus ou moins grande. Cette dispersion de poussières se produit déjà lors du remplissage de l'épandeur par transfert à l'air pulsé. En outre lors de l'épandage, en dépit de la protection de principe apportée par les jupes citées plus haut, le produit pulvérulent épandu tombe souvent d'une hauteur importante nécessitée par le besoin d'une garde suffisante entre la sortie de ce produit et le sol en raison des irrégularités de ce sol. L'énergie cinétique accumulée lors de cette chute par les particules se dissipe par rebond au contact du sol, entraînant un nuage de poussières.

Par ailleurs la masse de produit contenue dans l'épandeur présente des irrégularités de masse volumique qui peuvent être importantes, en particulier lorsque l'épandeur est chargé par transfert par air pulsé. Le produit contient alors de l'air occlus de manière irrégulière et ses grains se chargent en outre d'électricité statique, ce qui augmente les irrégularités de masse volumique. Cet effet est encore plus marqué lorsque le produit est livré chaud, cas également très fréquent.

En outre le produit est extrait du silo où il est contenu par des procédés mécaniques, tels qu'une vis ou un tapis, pour être transporté vers le doseur et le répartiteur, qui sont dans la majorité des cas situés à l'arrière de l'épandeur. Ceci crée une modification supplémentaire de la masse volumique du produit par compression et/ou foisonnement. Dans certains cas l'extraction est effectuée par air pulsé et les différences de pression qui se produisent inévitablement donnent les mêmes résultats sur la masse volumique du produit. Par ailleurs, le produit ainsi amené à l'arrière de l'épandeur est ensuite généralement réparti transversalement par l'intermédiaire de vis à pas divergents, puis dosé, par exemple à l'aide d'un tambour alvéolaire, d'un casque ou d'un tapis. Cette dernière manipulation augmente encore les risques d'irrégularités dans la répartition du produit sur la surface du sol.

Pour pallier ces inconvénients, l'invention propose un épandeur pour traitement de terrain, du type comprenant un silo dont la partie inférieure constitue une trémie ayant la forme d'un prisme tronqué dont la base est vers le haut et dont la partie inférieure tronquée est directement fixée à un doseur et s'étend, ainsi que le doseur, sur sensiblement toute la largeur de l'épandeur pour traiter le terrain sur sensiblement toute cette largeur sans triturer le produit à épandre, principalement caractérisé en ce qu'il comprend un cadre ouvert sur toute la largeur de l'épandeur pour recevoir le silo et des moyens de support pour faire monter et descendre l'ensemble silo/doseur verticalement par rapport au sol afin de pouvoir régler la distance entre le terrain à traiter et le doseur de manière à minimiser cette distance pendant le traitement.

Selon une autre caractéristique, ces moyens de support de l'ensemble silo/doseur permettent également de le faire basculer vers l'avant et vers l'arrière.

Selon une autre caractéristique, ces moyens de support sont formés de 3 ou 4 vérins situés sur le pourtour du silo et articulés à l'aide de tourillons ou de cardans.

Selon une autre caractéristique, le doseur est du type à rotor de grand diamètre muni de petites alvéoles.

Selon une autre caractéristique, l'épandeur comprend des moyens de fixation du doseur sur la trémie permettant de changer le modèle de doseur.

Selon une autre caractéristique, l'épandeur comprend un cadre ouvert sur toute la largeur de l'épandeur pour recevoir le silo, dont la section transversale par rapport à l'axe de l'épandeur est constante et maximale par rapport à l'ouverture du cadre.

Selon une autre caractéristique, l'épandeur comprend quatre roues pouvant pivoter sur 180 degrés, situées aux quatre coins du cadre, pour élargir la voie, augmenter la stabilité de l'épandeur, et éviter d'écraser les bords de la bande de matériaux déversés sur le terrain

Selon une autre caractéristique, l'épandeur comprend en outre une cloison verticale transversale et médiane partageant le silo en deux parties, et des moyens pour obturer sur commande la jonction entre la trémie et le doseur de manière à alimenter le doseur par l'une et/ou par l'autre des deux parties du silo.

Selon une autre caractéristique, l'épandeur comprend deux doseurs rotatifs de diamètres différents destinés à être alimentés respectivement par chacune des deux parties du silo, et la cloison verticale médiane est mobile pour délimiter deux parties inégales dont les volumes correspondent aux débits des doseurs.

Selon une autre caractéristique, le silo comprend une ouverture pouvant être reliée à un filtre permettant d'évacuer l'air apporté dans le silo par les moyens de remplissage de ce silo avec le produit de traitement avant le commencement des travaux; ce filtre étant supporté par une remorque susceptible d'être attelée à l'épandeur selon une position de remorquage ou selon une position de transport.

Selon une autre caractéristique, l'épandeur comprend en outre des moyens de malaxage situés derrière le doseur pour assurer le mélange du terrain et du produit épandu sur celui-ci à l'avant des moyens de malaxage; ces moyens de malaxage étant fixés au cadre par des moyens de réglage de leur hauteur par rapport au sol.

Selon une autre caractéristique, l'épandeur comprend en outre deux carters enveloppant respectivement les moyens de malaxage et le doseur et comportant des ouvertures venant s'emboîter l'une dans l'autre en position de travail pour assurer l'étanchéité de l'ensemble.

Selon une autre caractéristique, les moyens de malaxage sont divisés en deux parties distinctes par rapport au plan de symétrie longitudinal séparées et situées respectivement devant chacune des roues arrières en ménageant un espace non malaxé entre elles, pour malaxer deux bandes de terrain destinées à être ensuite écrasées par ces roues.

Selon une autre caractéristique, l'épandeur comprend en outre des moyens de cisaillement du terrain situés devant le doseur pour ameublir le terrain avant l'épandage du produit; ces moyens de cisaillements étant fixés au cadre par des moyens de réglage de leur hauteur par rapport au sol pouvant fonctionner indépendamment des autres moyens de réglage des hauteurs du silo et des moyens de malaxage.

Selon une autre caractéristique, ces moyens de cisaillement sont munis d'un moteur permettant de minimiser l'effort de traction de l'épandeur sur les moyens de cisaillement.

Selon une autre caractéristique, l'épandeur comprend des moyens de mesure du poids de l'ensemble silo/doseur et des moyens de traitement des signaux obtenus par ces moyens de mesure, pour déterminer à partir de la variation de ce poids le flux du produit épandu sur le terrain et pour régler le débit du doseur afin d'obtenir une répartition régulière du produit sur le terrain.

Selon une autre caractéristique, ces moyens de mesure fonctionnent à partir de la pression d'huile dans les vérins permettant de régler la position du silo.

Selon une autre caractéristique, l'épandeur comprend en outre des moyens permettant de détecter la position de la bande de produit épandue sur le terrain et de régler la direction d'avancement de l'épandeur pour maintenir les bandes de produit épandues successives contiguës les unes aux autres.

D'autres particularités et avantages de l'invention apparaîtront clairement dans la description suivante, présentée à titre d'exemple non limitatif en regard des figures annexées qui représentent :
- les figures 1 et 2, des vues de côté d'un épandeur selon l'invention, en position de déplacement et en position de travail;
- les figures 3 à 5, des vues de côté d'une variante de cet épandeur selon une position de repos et deux positions de travail;
- la figure 6, une vue de côté d'une variante de cet épandeur comportant un doseur double;
- la figure 7, une vue arrière d'un filtre adaptable aux épandeurs des figures précédentes;
- les figures 8 et 9, des vues de côté de ce filtre attelé à l'un de ces épandeurs;
- les figurés 10 et 11, des vues de côté d'un épandeur selon les figures 1 et 2, comportant des moyens additionnels de malaxage du sol; et
- les figures 12 à 14, des vues de côté d'une variante d'un épandeur selon les figures 10 et 11.

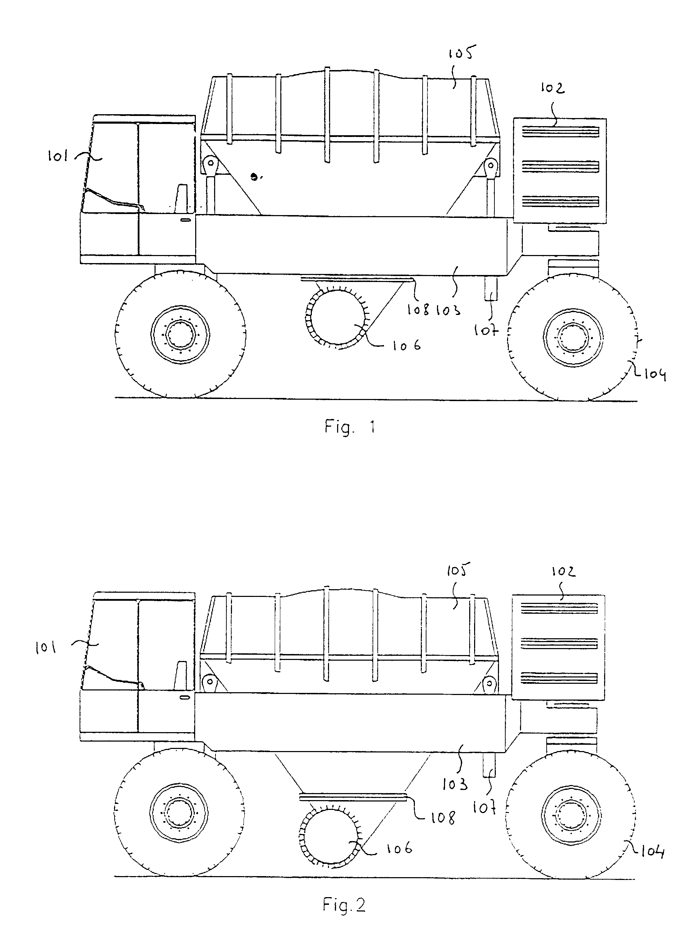

L'épandeur Selon l'invention présenté sur les figures 1 et 2 a la forme d'un engin automoteur comprenant un châssis 103 formant un cadre entièrement ouvert sur lequel sont fixés les organes de traitement qui seront décrits plus loin. Ce châssis 103 repose sur au moins quatre roues simples ou jumelées 104 fixées respectivement aux quatre coins du châssis par un support pouvant pivoter autour d'un axe vertical, ce qui permet d'accroire la stabilité de l'épandeur L'écartement de ces roues et la position de leur pivot vertical permettent d'obtenir, en utilisant un même rayon de braquage pour les roues avant et arrière, que l'empreinte des roues, ainsi que la jetée du produit sur le sol, soient des arcs de cercle admettant le même centre, et que chaque roue tangente la veine de traitement ou l'écrase à une distance telle que son passage n'entraîne pas un élargissement de cette veine par effondrement ou écrasement. On améliore ainsi la qualité du travail. En outre, pour limiter la largeur de l'encombrement de l'ensemble, les montants latéraux du cadre 103 sont fabriqués avec une poutre de faible largeur, mais suffisamment haute pour présenter la résistance nécessaire.

Le châssis supporte à l'avant une cabine 101 pour le conducteur, et à arrière des organes moteurs 102 permettant de fournir, par exemple de manière hydraulique, la puissance nécessaire au déplacement de l'engin et au fonctionnement des organes d'épandage et de traitement du sol.

L'ensemble destiné à contenir le produit de traitement et à le répandre sur le sol est formé d'un silo 105, présentant la forme d'une caisse sensiblement parallélépipédique surmontant une trémie en forme de prisme tronqué, terminée par un doseur rotatif 106. La grande base du prisme est vers le haut et sa pointe vers le bas. Cette pointe est tronquée horizontalement en bas de la trémie pour former un joint de fixation 108 de cette trémie avec le doseur 106, qui est amovible. Dans ces conditions, les parties latérales du silo par rapport à l'axe du véhicule sont verticales, et les parties transversales sont légèrement inclinées vers l'intérieur en partie haute, puis inclinées vers le doseur pour former la trémie, de manière à alimenter directement ce doseur par simple gravité.

Les parois du silo sont donc inclinées pour que l'écoulement se fasse sans heurts. L'écoulement étant en outre gravitaire, il n'est donc pas nécessaire de fluidifier le produit, ce qui élimine tous les problèmes amenés par la fluidisation, lorsque celle-ci est nécessaire dans les dispositifs connus.

Le doseur 106 s'étendant sur toute la largeur du silo et du véhicule, le travail s'effectue en pleine largeur et la largeur de l'épandage correspond au plus à la largeur de stockage, ce qui signifie qu'il n'y a pas de manipulation supplémentaire du produit pour pouvoir adapter la largeur d'extraction dans le silo à la largeur d'épandage, d'où une disparition des inconvénients provenant de cette manipulation.

En outre une telle disposition permet d'utiliser pour le doseur 106 des systèmes de grande taille, tel que par exemple le tambour alvéolaire de grand diamètre représenté sur la figure, ou dans des variantes un tapis doseur. La fixation par boulonnage de ce doseur sur le joint en bas de la trémie permet le changement de doseur pour avoir la meilleure adaptation aux travaux en cours. L'utilisation de doseurs de grandes dimensions permet là aussi de limiter la trituration du matériau à épandre, ce qui réduit les mouvements à l'intérieur de l'épandeur et permet d'obtenir des trajectoires des grains de produits coplanaires à un plan longitudinal. Comme des trajectoires sont courtes, les vitesses sont réduites.

Toutes ces dispositions entraînent que le produit se désaére dans son mouvement et que sa masse volumique se stabilise, ce qui permet d'améliorer beaucoup la régularité de l'épandage.

De plus, l'utilisation d'un tambour de grand diamètre permet de réduire, pour un débit donné, les dimensions des alvéoles, ce qui permet de mieux répartir le produit sur le sol. Elle permet aussi de disposer d'une plus grande plage de débit linéaire horaire, ce qui permet d'accroître le rendement de l'épandeur.

Selon l'invention, pour fixer le silo 105 au cadre 103 on utilisera des moyens réglables permettant de faire varier la hauteur de l'ensemble 105/106 par rapport au sol. Ces moyens prendront par exemple, comme sur la figure, la forme de 4 vérins 107 situés aux 4 coins du silo, ou éventuellement de trois vérins avec l'un d'entre eux fixé de manière centrale pour faciliter la commande en évitant une disposition hyperstatique. Ces vérins sont munis de moyens de fixation permettant une suspension semi-pendulaire de l'ensemble silo/doseur, pour réduire les contraintes liées aux mouvements et éviter les effets des déformations éventuelles du châssis. Ces moyens seront formés par exemple d'une fixation par chape entre l'axe du vérin et le silo, et d'une fixation par tourillons entre le corps du vérin et le châssis. Le cas échéant ces tourillons seront aménagés pour former un cardan.

De cette manière, le silo 105 est fixé au cadre 103 de manière solide et souple, tout en pouvant effectuer, sur commande, des mouvements de translation verticale par rapport à celui-ci, ce qui permet de régler la hauteur d'épandage du produit par rapport au sol pour agir en particulier sur le niveau d'émission de poussières.

En outre, en agissant de manière différentielle sur les vérins on pourra faire basculer le silo vers l'avant ou vers l'arrière, ce qui permet de modifier l'inclinaison de la trémie et donc les conditions d'alimentation du doseur pour modifier les conditions d'écoulement du produit à épandre. Cette variation d'inclinaison permet également, comme décrit plus loin, de diviser le silo en deux parties pour augmenter les pentes d'alimentation d'environ 15°, en passant par exemple de 55° environ à 70° environ, afin d'améliorer l'alimentation du doseur par gravité avec un minimum de trituration du matériau à épandre.

Dans la position extrême basse le silo reposera sur le cadre 103, ce qui donnera une position de repos, utile par exemple pour transporter l'engin sur une remorque. A titre de variante, on pourra prévoir de placer au niveau des appuis en fin de course du silo sur le cadre des moyens de mesure, par exemple des jauges de contrainte, permettant de déterminer le poids du silo et de son contenu afin par exemple de limiter le remplissage du silo dans le cas d'utilisation de matériau particulièrement pondéreux et de connaître la masse épandue entre deux pesées.

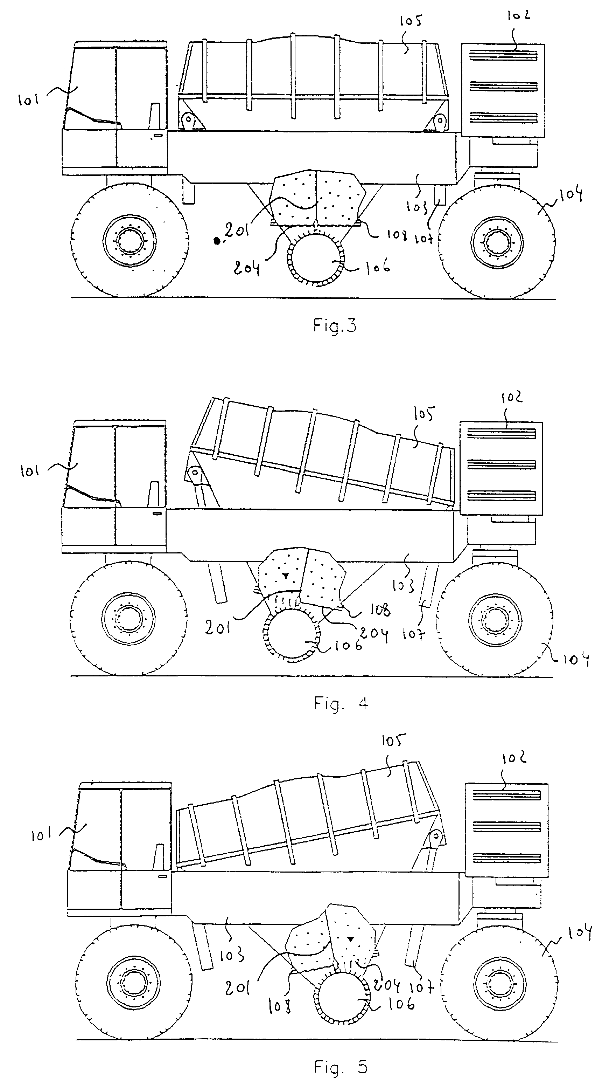

L'inclinaison du silo vers l'avant ou vers l'arrière, obtenue par action différentielle sur les vérins, est représentée sur les figures 3 à 5, qui représentent également une variante de l'invention où le silo est divisé en deux parties par une cloison interne transversale médiante fixe 201. On remarque que la légère inclinaison des parois de la partie haute du silo, citée plus haut, permet de basculer au maximum celui-ci vers l'avant ou arrière sans que ces parois interférent avec la cabine 101 ou le moteur 102.

Des moyens de fermeture 204, formés par exemple par des volets mobiles, permettent à volonté d'empêcher le produit à épandre de tomber dans le doseur 106. Cette fermeture peut se faire de manière indépendante pour la partie avant du silo et pour la partie arrière. De cette manière on peut fermer totalement le silo, comme sur la figure 3, lorsque celui-ci est horizontal.

Pour épandre le produit contenu dans la partie avant du silo, on incline celui-ci vers l'arrière, comme sur la figure 4. On ouvre ensuite les volets qui obturent cette partie avant, en gardant fermés ceux qui obturent la partie arrière, et on fait tourner le tambour doseur. Ainsi le produit tombe sur le doseur de la manière la plus verticale qui soit possible, puisque la cloison avant de la trémie est nettement plus verticale que dans la position de la figure 3, et que la cloison médiane 201 présente sensiblement la même inclinaison.

Sous l'effet de la gravité, on obtient de cette manière un mouvement d'ensemble vers le doseur de la masse du produit contenu dans la partie avant et on évite ainsi tout effet de voûte ou de cheminée, qui provoquerait une trituration du produit et amènerait des variations locales de masse volumique, nuisibles à l'uniformité de l'épandage.

Lorsque la partie avant du silo est vide, on ferme les volets avant, on bascule le silo vers l'avant et on ouvre les volets arrière, comme représenté sur la figure 5. Ceci permet de vider la partie arrière du silo dans les mêmes conditions que la partie avant.

De cette manière on peut aussi obtenir une utilisation plus complète du volume de produit contenu dans le silo.

On peut aussi, lorsque l'on effectue un épandage sur une surface par bandes successives correspondant à des allers et retours de l'épandeur, utiliser pour une bande l'une des parties du silo, et pour l'autre bande l'autre partie. De cette manière, on laisse reposer le volume du produit dans chaque partie pendant la moitié du temps de travail, ce qui contribue à la stabilisation du produit.

Il est aussi possible de remplir les deux parties du silo avec des produits de traitement différents et d'utiliser l'un ou l'autre au choix.

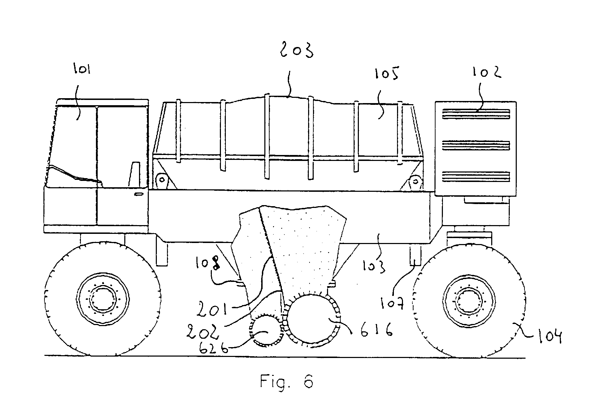

Pour pouvoir mélanger des produits selon des proportions différentes et définies, éventuellement variables, par exemple une partie de chaux pour six parties de ciment dans le cas d'un sol faiblement argileux et peu humide, l'invention propose d'utiliser deux doseurs distincts de tailles différentes alimentés chacun par une partie du silo de taille différente de celle de l'autre, comme représenté sur la figure 6. Pour cela, la cloison médiane 201 sera de préférence mobile de manière à pouvoir basculer autour d'un axe d'articulation transversal 202 situé au niveau du joint 108. Le toit du silo sera prévu pour former une bosse 203 permettant le mouvement de la cloison en avant et en arrière afin, entre autres, de pouvoir modifier le volume de ces deux parties.

Comme représenté sur la figure, le doseur unique 106 a été remplacé par deux doseurs rotatifs 616 et 626 parallèles et de même largeur. Ce remplacement est facilité par le boulonnage au niveau du joint 108. Ces doseurs sont par contre de diamètres différents, en relation avec les proportions des produits à épandre. Cette relation n'est pas nécessairement une proportionnalité directe, qui pourrait amener à des différences de diamètres trop importantes, l'un des doseurs étant beaucoup trop gros et l'autre beaucoup trop petit. Pour pallier cet inconvénient, on pourra alors utiliser des doseurs de diamètres raisonnablement différents et obtenir le dosage souhaité en les faisant tourner à des vitesses de rotation différentes, le plus gros tournant plus vite que le plus petit. A l'inverse, on pourra faire tourner le plus petit plus vite que le plus gros, pour diminuer l'écart de dosage et pouvoir utiliser un même jeu de doseurs différents sans en multiplier le nombre en fonction des écarts de dosage souhaités.

Lorsque l'épandeur sera équipé selon une telle disposition, on pourra remplir les deux parties du silo avec des quantités de produits à épandre correspondant directement à la proportion du mélange à obtenir, pour éviter d'interrompre le travail en rechargeant une partie du silo alors que l'autre n'est pas encore vide. Afin de pouvoir alors remplir complètement le silo, on inclinera la cloison médiane 201 pour obtenir des volumes des deux parties correspondant aux quantités nécessaire. De manière pratique, on pourra bloquer le déplacement de cette cloison à la valeur voulue par un câble de longueur déterminée à cet effet. En remplissant alors la partie du côté où se trouve le câble, la cloison basculera sous l'effet de la poussée du produit, jusqu'à ce que le câble soit tendu. Après que cette partie soit remplie, on remplira alors l'autre, et l'épandeur contiendra donc les quantités souhaitées de produits.

Cette disposition permet ainsi d'optimiser les formules des produits épandus, par exemple, outre le cas déjà cité, en associant un liant routier et du ciment, ou en mélangeant une cendre volante à effet pouzzolanique avec un activant.

On sait en outre que l'inventeur a proposé dans le brevet français numéro FR-A-2359452 déposé le 21 juillet 1976 sous le numéro 7622201 et délivré le 3 octobre 1980 un épandeur à dosage pondéral équipé de moyens d'enregistrement et de contrôle qui permettent de connaître la quantité de produit épandu sur le sol.

Pour pouvoir mieux apprécier l'efficacité des moyens de traitement des sols, l'administration française a mis au point une méthode de mesure permettant de connaître, avec une certaine approximation, la valeur moyenne et l'écart type de la distribution de l'épandage.

Cette méthode de mesure utilise entre autre des bâches pour déterminer les dispersions transversales et longitudinales, et une mesure des charges des essieux avant et après épandage à l'aide de balance mobiles pour déterminer la valeur moyenne de cet épandage.

Pour pouvoir passer de la connaissance du résultat à une amélioration directe des caractéristiques d'épandage, l'invention propose de corriger en temps réel le flux du produit à épandre en agissant sur le débit du doseur 106 en fonction de la mesure de ce débit, obtenue de manière indirecte par la mesure des variations de poids de l'ensemble silo/silo/doseur 105-106 qui donnent le poids du produit épandu.

La mesure du poids de cet ensemble peut être faite par différentes manières. Une de ces manières consiste à mettre des jauges de contrainte à des emplacements adéquats sur les points de fixations du silo 105 sur le cadre 103. L'autre manière consiste à mesurer la pression d'huile dans le système hydraulique de réglage de la hauteur du silo. Cette deuxième manière est plus simple mais elle nécessite que cette hauteur soit effectivement réglée par un système hydraulique.

A partir de la mesure instantanée du poids, on obtient par des moyens électroniques actuellement bien maîtrisés une mesure de la variation de ce poids, et donc en mesurant la vitesse d'avancement de l'épandeur on détermine directement la dose épandue par unité de surface. On peut alors par un système de régulation automatique ajuster la vitesse de rotation du tambour du doseur 106 pour maintenir en permanence cette valeur à la valeur de consigne choisie. Les performances des systèmes électronique actuellement disponibles permettent d'obtenir cette régulation avec une marge d'erreur tout à fait suffisante par rapport aux besoins connus.

En outre en analysant de manière fine, comme on sait maintenant le faire, les variations des signaux ainsi obtenus on peut parfaitement déterminer les variations de glissement du produit dans le silo, amenant par exemple une surcharge ou une décharge du doseur. La connaissance de ces mouvements permettra alors d'apporter des actions correctrices, par exemple en faisant bouger le silo en avant ou en arrière pour régulariser la répartition du matériaux dans le silo. Le cas échéant un enregistrement de ces signaux sur une période suffisamment longue permettra d'apporter des actions correctrices sur la structure du silo, par exemple en modifiant la forme et l'inclinaison.des parois, ou en insérant des parois internes amovibles à des emplacements dépendant des matériaux utilisés.

La solution la simple pour gérer ce système consiste à utiliser un micro-ordinateur du type PC convenablement programmé. Les fonctions à gérer étant relativement simples, on disposera ainsi d'une puissance de traitement considérables qui pourra être utilisée pour des fonctions complémentaires à l'invention.

L'invention propose donc en outre d'utiliser des capteurs reliés à ce dispositif électronique pour identifier la ligne de démarcation entre la partie du sol ayant reçu du produit de traitement et la partie de ce sol n'en ayant pas reçu. Ces capteurs peuvent fonctionner de différentes manières, par détection du contraste, de la température ou de la différence altimétrique... Cette information étant ainsi obtenue il est facile de la traiter pour déterminer une action correctrice permettant de corriger la trajectoire de l'épandeur afin d'ajuster le raccordement entre les bandes de sol traitées. Ceci peut se faire soit par des indications données au conducteur, soit même par action automatique sur la direction du véhicule tracteur.

L'invention propose également de placer des capteurs de sécurité permettant à tout moment d'interrompre le fonctionnement de l'épandeur lorsque des paramètres particuliers liés au cycle de vidange ou à la sécurité, tels que la présence d'obstacles, ou un effort de traction excessif sur les organes de cisaillement ou de malaxage du sol, sont franchis.

Comme on l'a vu plus haut, une source importante de poussières est celle qui provient du remplissage de la trémie, surtout lorsque ce remplissage s'effectue à l'air pulsé.

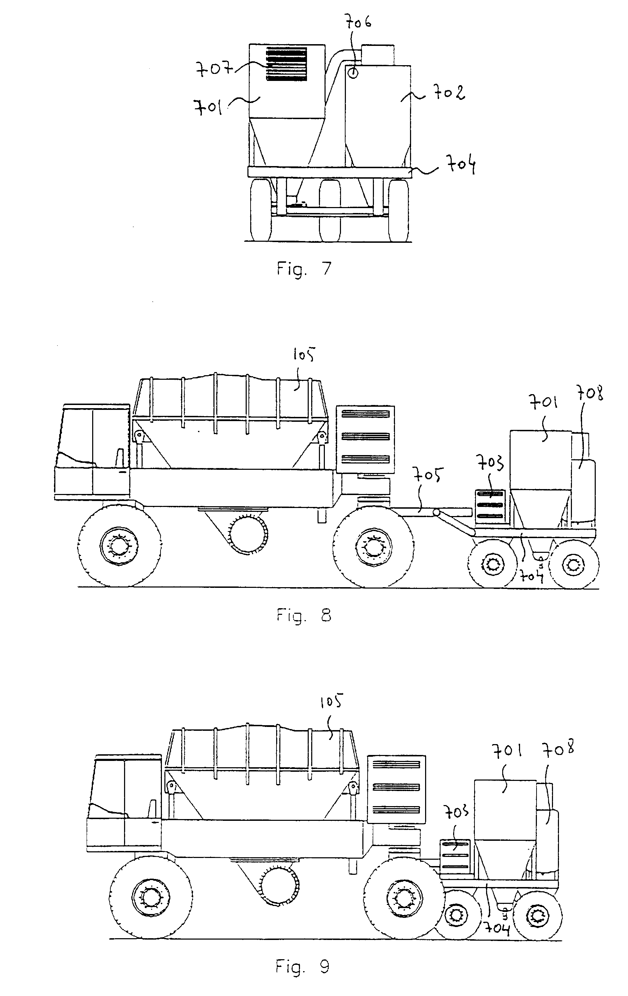

Pour éliminer ces nuisances, l'invention propose donc d'utiliser un filtre industriel de type connu, représenté seul par l'arrière sur la figure 7, et de côté et accouplé à l'épandeur selon l'invention sur les figures 8 et 9.

Ce filtre 701, du type.à membrane par exemple, est associé à un cyclone 702 et est actionné par un groupe moto-compresseur 703. L'ensemble est disposé sur une remorque 704.

On profite du faible encombrement en longueur de l'épandeur pour transporter l'ensemble entre deux chantiers en crochetant la remorque à l'épandeur, au plus prés de celui-ci, comme représenté sur la figure 9. Ceci permet de transporter cet ensemble sur un seul véhicule, du type porte-char par exemple, et d'économiser ainsi des moyens de transport.

De même, ce faible encombrement permet, pour les déplacements à l'intérieur du chantier, de tracter le filtre en reliant la remorque à l'épandeur par un timon 705, comme représenté sur la figure 8; l'épandeur faisant office de véhicule tracteur. On n'a ainsi pas besoin de rendre le filtre auto-tracteur, ni de prévoir un tracteur indépendant.

Sur le chantier, on décroche la remorque pour la garer sur l'aire de dépotage des produits à épandre. Lors de toutes les opérations de chargement de l'épandeur, on relie le silo 105 de l'épandeur au cyclone 702 par un tuyau souple non représenté et venant se brancher sur un orifice 706. L'air pulsé ayant servi au transfert du produit dans le silo est alors filtré dans cet ensemble et s'échappe proprement dans l'atmosphère par l'orifice 707. Pour décolmater et purger l'ensemble des poussières ainsi recueillies, et les renvoyer vers le silo de stockage, on pourra utiliser par exemple de l'air comprimé contenu dans un réservoir 708.

On sait que dans l'art connu, après avoir étendu le produit sur le sol, on vient le mélanger avec la terre en procédant à un malaxage du sol et du produit à l'aide d'un dispositif tel que par exemple une fraise portée par un engin fonctionnant de manière indépendante. Outre la source de poussières supplémentaires entraînée par cette opération de malaxage, la présence pendant un temps indéterminé entre les deux opérations du produit libre sur le sol entraîne encore un risque supplémentaire par action directe du vent sur cette couche du produit, extrêmement sensible à l'action du vent lorsqu'il est en couche relativement mince sur le sol. Outre cette nuisance d'origine éolienne, on peut aussi être confronté à des problèmes de qualité d'origine météorique dus à l'action de la pluie qui peut venir laver la couche de produit avant le malaxage.

Or la puissance thermique du moteur 102 est déterminée pour permettre le déplacement de l'épandeur dans des conditions difficiles, notamment à pleine charge, à grande vitesse, sur un terrain difficile présentant une faible portance, sur des rampes de forte pente ...

Pendant les opérations d'épandage, qui ont généralement lieu sur un terrain bien préparé et plat et à une vitesse modérée, on dispose donc d'une réserve de puissance importante, d'autant plus que les moyens de l'invention ne demandent qu'une faible puissance pour l'épandage proprement dit, en raison de l'extraction du produit par gravité et de l'utilisation d'un doseur rotatif.

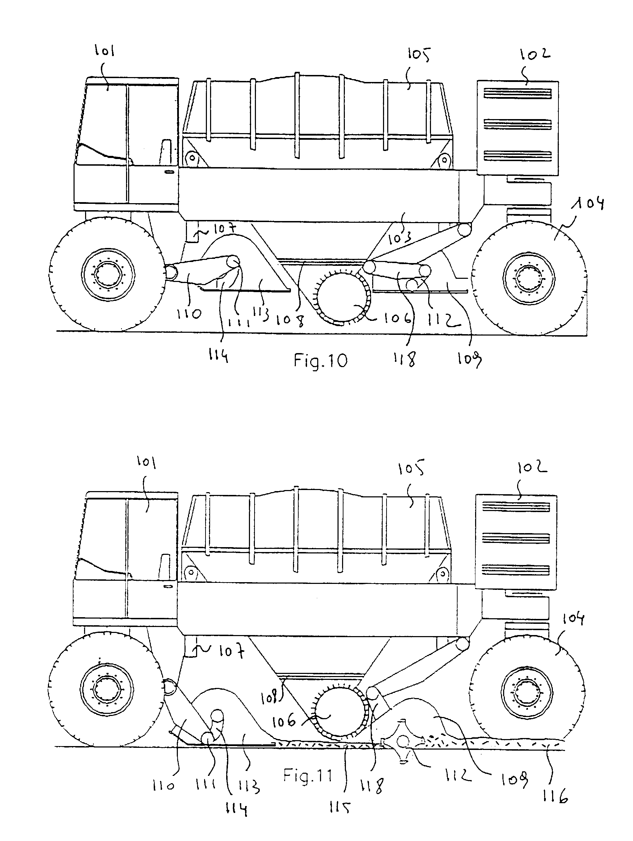

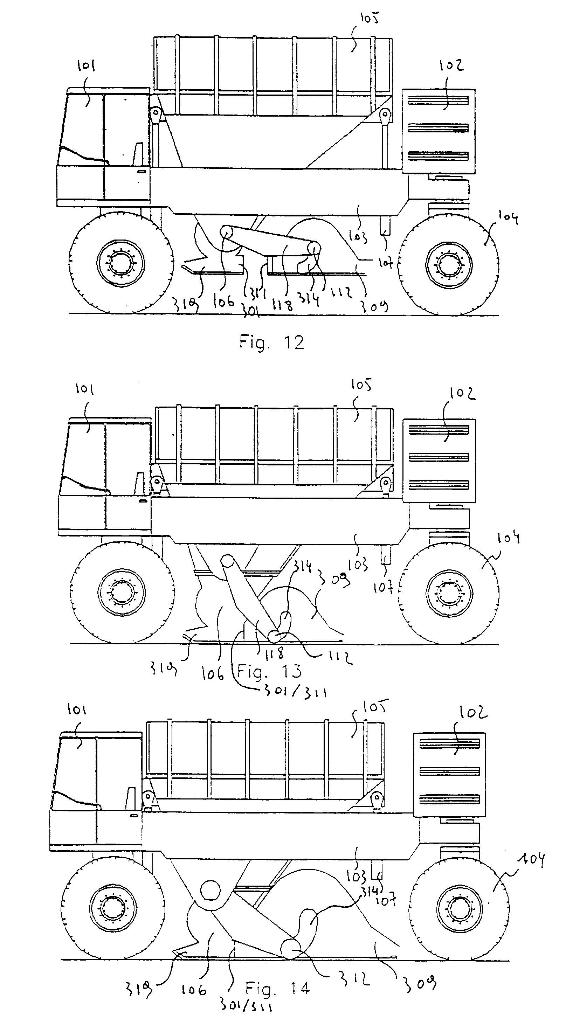

On constate en outre que la forme prismatique de la partie inférieure du silo de l'épandeur permet de disposer, Selon l'invention, en avant et en arrière du doseur, d'une place libre importante qui permet de loger différents moyens supplémentaires, qui sont représentés sur les figures 10 et 11 respectivement selon deux positions extrêmes, l'une de travail et l'autre complètement relevée pour le déplacement de l'épandeur en dehors des opérations d'épandage.

L'invention propose donc de rassembler au moins les deux opérations d'épandage et de malaxage, ou tout au moins de pré-malaxage, en une seule en disposant sur l'épandeur des moyens de malaxage tels qu'au moins une fraise 112, située juste derrière le doseur 106. Cette fraise est reliée au reste de l'engin par des moyens de fixation réglables tels que les bras 118 qui sont avantageusement articulés sur le châssis pour prendre appui sur ce châssis, qui supportera les efforts de réaction.

Cette fraise est entraînée indirectement par le moteur 102, par l'intermédiaire d'une transmission hydraulique. Elle est animée d'un mouvement relativement lent et elle assure le brassage du sol avec le matériau à épandre de manière à éviter au maximum la formation de poussières. On peut en outre avantageusement utiliser un carter (ou cloche) 109 venant recouvrir la fraise et qui pourra recouvrir partiellement le carter du doseur, sans le toucher pour éviter des perturbations réciproques entre ces carters.

Le mouvement lent de pré-malaxage ainsi obtenu permet au produit pulvérulent de s'introduire dans le sol et d'être recouvert de terre. Lorsque le malaxage à lieu ultérieurement après le passage de l'épandeur, lors de l'attaque par la fraise. puissante d'un malaxeur qui doit mélanger énergiquement le sol et le produit, les dents du rotor n'attaquent plus directement le produit déposé sur la surface du sol. Le niveau d'émission des poussières est donc très fortement réduit.

Le fait de procéder à un pré-mélange du liant avec le sol après l'épandage entraîne que les roues arrières de l'épandeur n'écrasent plus la veine du liant, comme décrit précédemment, mais le mélange sol/liant.

Comme la largeur de malaxage est supérieure à la largeur extérieure entre roues, le passage des roues entraîne par compactage une déformation verticale dans le sol décompacté, provenant de l'empreinte de la roue, sans engendrer de mouvements latéraux.

Il s'en suit que l'écartement entre les roues arrières ne constitue plus une contrainte de conception pour l'épandeur. En particulier, les roues peuvent être le plus écartées possible, de manière à accroître la stabilité de la machine.

La largeur de l'épandage est alors déterminée librement, avec comme seule nécessité de procéder à un malaxage plus large que la largeur de l'épandage et d'englober partiellement la largeur des roues, de manière à obtenir une butée latérale et à éviter l'effondrement du mur sol/liant avec déplacement lors du passage de la roue.

Cette solution est intéressante pour réaliser des épandeurs de petite capacité, pouvant être mieux adaptés à l'utilisation sur de petits chantiers. Elle permet en outre d'utiliser, à la place des roues pivotant sur 180°, des essieux fixes dont les roues sont éventuellement directrices.

Pour éviter alors un mélange entre la partie ayant reçu du liant et celle qui n'en a pas reçu, on compartimentera la chambre de malaxage avec un disque, semblable à celui d'une charrue, inséré dans la fraise à la limite de la zone d'épandage. En outre, de cette manière, on évite toute interférence entre les bandes et on délimite parfaitement la partie ayant reçu du liant.

La reprise pourra alors se faire par juxtaposition de bandes jointives. Lors de l'exécution de chantiers ne nécessitant pas de pré-malaxage, plutôt que de malaxer sur toute la largeur, on utilisera avantageusement deux petits malaxeurs situés respectivement devant chaque roue.

La largeur du malaxage étant réduite, on obtiendra une économie de fonctionnement.

La largeur de chaque fraise sera déterminée par rapport à la ligne de démarcation sol-sol/liant, avec un débord par rapport au flan intérieur du pneumatique de la roue, pour éviter un effondrement, et un débord par rapport à la ligne de démarcation côté extérieur pour la même raison, sans que le débord corresponde exactement à la largeur du pneumatique.

La mise en place et l'entraînement mécanique de ces deux fraises peuvent être réalisés à l'aide d'organes et d'un axe communs.

Compte tenu de la place disponible à l'avant du doseur, et des limitations des efforts de malaxage souhaitables au niveau de la fraise située derrière le doseur, l'invention propose également de préparer le sol préalablement à l'épandage du produit, de manière à ce que les moyens de malaxage 112 puissent intervenir sur un sol déjà préparé, donc ameubli, de manière à faciliter l'opération de malaxage tout en diminuant les efforts à ce niveau et donc en minimisant au maximum la création de poussières.

Pour cela on utilise des moyens de cisaillement du sol tels qu'un rotor 111 muni de pics et placé sous un carter 113, qui le cache sur la figure où le rotor est désigné par son axe. Ce carter (ou cloche) 113 permettra de limiter l'éventuelle production de poussière, qui peut se produire par exemple dans le cas d'un sol très sec. Le rotor est fixé sur le cadre 103 par des bras 110 qui permettent de le relever quand on ne l'utilise pas et de le faire descendre pour l'enfoncer plus ou moins dans le sol en fonction des besoins. Des lumières 114 pratiquées dans les parois latérales du carter 113 permettent de toujours faire reposer celui-ci sur le sol, quel que soit le degré d'enfoncement du rotor.

En faisant descendre le rotor muni de pics dans le sol d'une dizaine de centimètres par exemple, ces pics cisaillent alors le sol et le font foisonner de manière à ce qu'il ressorte en formant une couche ameublie 115 derrière eux, pour recevoir le produit délivré par le doseur 106, être ensuite malaxé par la fraise 112 et former une couche traitée 116.

L'utilisation d'un tel dispositif animé d'un mouvement obtenu par un moteur, hydraulique par exemple, permet de minimiser l'effort de traction exercé par le cadre sur le rotor. La puissance nécessaire au cisaillement du sol sera donc essentiellement transmise depuis le moteur principal par la transmission hydraulique. La puissance totale sera bien entendue fournie par ce moteur, lequel entraîne également la partie tractrice, mais l'effort au niveau des roues sera minimisé, ce qui peut être important en fonction de l'état du sol et des dimensions des roues tractrices.

Les hauteurs par rapport au sol de chacun de ces équipements, que ce soit le doseur 106, la fraise 112, ou le rotor défonceur 111, pourront être réglées séparément de manière à pouvoir optimiser les conditions de travail de l'ensemble, voire de manière à n'en utiliser qu'un seul dans des cas particuliers.

On a représenté sur les figures 12 et 13 une variante de l'épandeur représenté sur les figures 10 et 11, dans laquelle on n'utilise pas les moyens de défonçage décrits ci-dessus

La fraise est contenue dans un carter 309 qui repose en fonctionnement toujours sur le sol, grâce à une lumière 314 permettant le débattement vertical de l'axe de la fraise. Le doseur 106 est lui-même enfermé dans un carter 319 qui repose lui aussi en fonctionnement toujours sur le sol. Le carter 319 comporte une ouverture longitudinale arrière 301, et le carter 309 une ouverture longitudinale avant 311, pour laisser passer sans gêne la couche de produit épandu. Ces ouvertures sont prévues pour que les deux carters viennent s'emboîter l'un dans l'autre lorsqu'ils sont abaissés en position de travail, en assurant ainsi une très bonne étanchéité autour du doseur et de la fraise.

Dans cette version, on peut décaler vers l'avant l'ouverture inférieure de la trémie, en augmentant ainsi la place disponible à l'arrière du doseur. Ceci permet d'accroître les dimensions, et donc la puissance et la taille, de la fraise, et d'obtenir un engin dans lequel les deux fonctions d'épandage et de malaxage complet à grande profondeur sont réunies. Outre la solution aux problèmes de poussières, on évite ainsi d'utiliser deux machines distinctes qui opèrent par deux passages successifs. L'économie ainsi réalisée est évidente et est plus particulièrement utile sur les chantiers de courte durée. Par ailleurs, sur un chantier de grande taille, où des épandeurs de type classique sont déjà présents, on peut en cas de besoin utiliser l'épandeur selon l'invention uniquement pour le malaxage, en n'abaissant que la fraise et en maintenant relevés les autres organes.

Dans cet épandeur, représenté en figure 14, on utilise une fraise 312 de grande taille et de forte puissance, qui permet d'effectuer directement un malaxage complet et définitif sans nécessiter le passage d'un engin complémentaire.

On pourra ainsi effectuer un malaxage à grande vitesse en une seule passe, en gagnant donc un temps considérable sur l'exécution du chantier, sans augmenter les nuisances dues aux poussières.

Bien que l'épandeur selon l'invention soit décrit par rapport à une plate-forme automotrice, l'invention s'étend aux autres types de véhicules généralement utilisés pour l'épandage, par exemple aux tracteurs automoteurs et aux tracteurs avec remorque.

## Revendications

1. Epandeur pour traitement de terrain, du type comprenant un silo (105) dont la partie inférieure constitue une trémie ayant la forme d'un prisme tronqué dont la base est vers le haut et dont la partie inférieure tronquée est directement fixée à un doseur (106) et s'étend, ainsi que le doseur, sur sensiblement toute la largeur de l'épandeur pour traiter le terrain sur sensiblement toute cette largeur sans triturer le produit à épandre, caractérisé en ce qu'il comprend un cadre ouvert (103) sur toute la largeur de l'épandeur pour recevoir le silo (105) et des moyens de support (107) pour faire monter et descendre l'ensemble silo/doseur verticalement par rapport au sol afin de pouvoir régler la distance entre le terrain à traiter et le doseur de manière à minimiser cette distance pendant le traitement.

2. Epandeur selon la revendication 1, caractérisé en ce que ces moyens de support de l'ensemble silo/doseur permettent également de le faire basculer vers l'avant et vers l'arrière.

3. Epandeur selon l'une quelconque des revendications 1 et 2, caractérisé en que ces moyens de support sont formés de 3 ou 4 vérins (107) situés sur le pourtour du silo et articulés à l'aide de tourillons ou de cardans.

4. Epandeur selon l'une quelconque des revendications 1 à 3, caractérisé en ce que le doseur (106) est du type à rotor de grand diamètre muni de petites alvéoles.

5. Epandeur selon l'une quelconque des revendications 1 à 4, caractérisé en ce qu'il comprend des moyens de fixation (108) du doseur sur la trémie permettant de changer le modèle de doseur.

6. Epandeur selon l'une quelconque des revendications 1 à 5, caractérisé en ce qu'il comprend un cadre ouvert (103) sur toute la largeur de l'épandeur pour recevoir le silo (105), dont la section transversale par rapport à l'axe de l'épandeur est constante et maximale par rapport à l'ouverture du cadre.

7. Epandeur selon la revendication 6, caractérisé en ce qu'il comprend quatre roues (104) pouvant pivoter sur 180 degrés, situées aux quatre coins du cadre (103), pour élargir la voie, augmenter la stabilité de l'épandeur, et éviter d'écraser les bords de la bande de matériaux déversée sur le terrain.

8. Epandeur selon l'une quelconque des revendications 1 à 7, caractérisé en ce qu'il comprend en outre une cloison verticale transversale et médiane (201) partageant le silo en deux parties, et des moyens (204) pour obturer sur commande la jonction entre la trémie et le doseur de manière à alimenter le doseur par l'une et/ou par l'autre des deux parties du silo.

9. Epandeur selon la revendication 8, caractérisé en ce qu'il comprend deux doseurs rotatifs (616,626) de diamètres différents destinés à être alimentés respectivement par chacune des deux parties du silo, et en ce que la cloison verticale médiane (201) est mobile pour délimiter deux parties inégales dont les volumes correspondent aux débits des doseurs.

10. Epandeur selon l'une quelconque des revendications 1 à 9 caractérisé en ce que le silo (105) comprend une ouverture pouvant être reliée à un filtre (701,702) permettant d'évacuer l'air apporté dans le silo par les moyens de remplissage de ce silo avec le produit de traitement avant le commencement des travaux; ce filtre étant supporté par une remorque (704) susceptible d'être attelée à l'épandeur selon une position de remorquage ou selon une position de transport.

11. Epandeur selon l'une quelconque des revendications 1 à 10, caractérisé en ce qu'il comprend en outre des moyens de malaxage (112) situés derrière le doseur (106) pour assurer le mélange du terrain et du produit épandu sur celui-ci à l'avant des moyens de malaxage; ces moyens de malaxage étant fixés au cadre (103) par des moyens de réglage (108) de leur hauteur par rapport au sol.

12. Epandeur selon la revendication 11, caractérisé en ce qu'il comprend en outre deux carters (309,319) enveloppant respectivement les moyens de malaxage (112) et le doseur et comportant des ouvertures (301,311) venant s'emboîter l'une dans l'autre en position de travail pour assurer l'étanchéité de l'ensemble.

13. Epandeur selon l'une quelconque des revendications 11 et 12, caractérisé en ce que les moyens de malaxage (112) sont divisés en deux parties distinctes par rapport au plan de symétrie longitudinal séparées et situées respectivement devant chacune des roues arrières en ménageant un espace non malaxé entre elles, pour malaxer deux bandes de terrain destinées à être ensuite écrasées par ces roues.

14. Epandeur selon l'une quelconque des revendications 1 à 13, caractérisé en ce qu'il comprend en outre des moyens de cisaillement (111) du terrain situés devant le doseur (106) pour ameublir le terrain avant l'épandage du produit; ces moyens de cisaillements étant fixés au cadre (103) par des moyens de réglage (110) de leur hauteur par rapport au sol pouvant fonctionner indépendamment des autres moyens de réglage des hauteurs du silo (105) et des moyens de malaxage (112).

15. Epandeur selon la revendication 14, caractérisé en ce que ces moyens de cisaillement (111) sont munis d'un moteur autonome permettant de minimiser l'effort de traction de l'épandeur sur les moyens de cisaillement.

16. Epandeur selon l'une quelconque des revendications 1 à 15, caractérisé en ce qu'il comprend des moyens de mesure du poids de l'ensemble silo/doseur (105,106) et des moyens de traitement des signaux obtenus par ces moyens de mesure, pour déterminer à partir de la variation de ce poids le flux du produit épandu sur le terrain et pour régler le débit du doseur (106) afin d'obtenir une répartition régulière du produit sur le terrain.

17. Epandeur selon la revendication 16, caractérisé en ce que ces moyens de mesure fonctionnent à partir de la pression d'huile dans les vérins (107) permettant de régler la position du silo (105).

18. Epandeur selon l'une quelconque des revendications 1 à 17, caractérisé en ce qu'il comprend en outre des moyens permettant de détecter la position de la bande de produit épandue sur le terrain et de régler la direction d'avancement de l'épandeur pour maintenir les bandes de produit épandues successives contiguës les unes aux autres.

## Patentansprüche

1. Streuer zur Geländebearbeitung vom Typ mit einem Silo (105), dessen unterer Teil einen Trichter bildet, welcher die Form eines kegelstumpfförmigen Prismas hat, dessen Basis sich oben befindet und dessen unterer kegelstumpfförmiger Teil direkt an einer Dosiervorrichtung (106) befestigt ist und sich ebenso wie die Dosiervorrichtung auf im wesentlichen der gesamten Breite des Streuers erstreckt, um das Gelände im wesentlichen auf dieser gesamten Breite zu bearbeiten, ohne das auszustreuende Produkt zu verreiben, dadurch gekennzeichnet, daß er einen offenen Rahmen (103), der auf der ganzen Breite des Streuers offen ist, um das Silo (105) aufzunehmen, und Stützmittel (107) aufweist, um die Gesamtheit Silo/Dosiervorrichtung vertikal bezüglich des Bodens steigen und absinken zu lassen, um den Abstand zwischen dem zu bearbeitenden Gelände und der Dosiervorrichtung derart zu regulieren, daß dieser Abstand während der Bearbeitung minimiert wird.

2. Streuer nach Anspruch 1, dadurch gekennzeichnet, daß diese Stützmittel es erlauben, die Gesamtheit Silo/Dosiervorrichtung ebenfalls nach vorn und nach hinten kippen zu lasen.

3. Streuer nach einem der Ansprüche 1 und 2, dadurch gekennzeichnet, daß diese Stützmittel aus drei oder vier Stellantrieben (107) gebildet sind, die auf dem Umfang des Silos angeordnet sind und mittels Lagerzapfen oder Kardanantrieben angelenkt sind.

4. Streuer nach einem der Ansprüche 1 bis 3, dadurch gekennzeichnet, daß die Dosiervorrichtung (106) vom Rotortyp mit großem Durchmesser ist, der mit kleinen Zellen versehen ist.

5. Streuer nach einem der Ansprüche 1 bis 4, dadurch gekennzeichnet, daß er Befestigungsmittel (108) für die Dosiervorrichtung auf dem Trichter aufweist, welche es erlauben, das Modell der Dosiervorrichtung zu wechseln.

6. Streuer nach einem der Ansprüche 1 bis 5, dadurch gekennzeichnet, daß er einen offenen Rahmen (103) auf der ganzen Breite des Streuers aufweist, um das Silo (105) aufzunehmen, dessen Querschnitt bezüglich der Achse des Streuers konstant und bezüglich der Öffnung des Rahmens maximal ist.

7. Streuer nach Anspruch 6, dadurch gekennzeichnet, daß er vier Räder (104) aufweist, die um 180° schwenken können, welche in den vier Ecken des Rahmens (103) angeordnet sind, um die Bahn zu verbreitern, die Stabilität des Streuers zu erhöhen und ein Überfahren der Ränder des auf dem Gelände ausgeschütteten Materialstreifens zu verhindern.

8. Streuer nach einem der Ansprüche 1 bis 7, dadurch gekennzeichnet, daß er ferner eine vertikale Trennwand (201) aufweist, die transversal und mittig das Silo in zwei Teile teilt, und Mittel (204), um nach Wunsch die Verbindung zwischen dem Trichter und der Dosiervorrichtung derart abzusperren, daß die Dosiervorrichtung durch den einen und/oder den anderen Teil des Silos gespeist wird.

9. Streuer nach Anspruch 8, dadurch gekennzeichnet, daß er zwei Rotationsdosiervorrichtungen (616, 626) von verschiedenen Durchmessern aufweist, die dazu bestimmt sind, jeweils von einem der zwei Teile des Silos gespeist zu werden, und dadurch, daß die vertikale mittlere Trennwand (201) beweglich ist, um zwei ungleiche Teile zu begrenzen, deren Volumina den Durchsätzen der Dosiervorrichtung entsprechen.

10. Streuer nach einem der Ansprüche 1 bis 9, dadurch gekennzeichnet, daß das Silo (105) eine Öffnung aufweist, die mit einem Filter (701, 702) verbunden werden kann, der es erlaubt, Luft abzuziehen, die in das Silo durch die Füllmittel dieses Silos mit dem Bearbeitungsprodukt vor Beginn der Arbeiten zugeführt wurde; dieser Filter durch einen Anhänger (704) gestützt wird, der geeignet ist, an den Streuer gemäß einer Schlepposition oder gemäß einer Transportposition angehängt zu werden.

11. Streuer nach einem der Ansprüche 1 bis 10, dadurch gekennzeichnet, daß er ferner Durcharbeitungsmittel (112) aufweist, die hinter der Dosiervorrichtung (106) angeordnet sind, um das Mischen des Gebietes und des auf diesem vor dem Durcharbeitungsmittel ausgestreuten Produktes sicherzustellen; wobei diese Durcharbeitungsmittel an dem Rahmen (103) mittels Reguliermitteln (108) für ihre Höhe bezüglich des Bodens befestigt sind.

12. Streuer nach Anspruch 11, dadurch gekennzeichnet, daß er ferner zwei Kästen (309, 319) aufweist, die jeweils die Durcharbeitungsmittel (112) und die Dosiervorrichtung umhüllen und Öffnungen (301, 311) aufweisen, welche sich in Arbeitsposition ineinander schieben, um die Dichtigkeit der Gesamtheit sicherzustellen.

13. Streuer nach einem der Ansprüche 11 und 12, dadurch gekennzeichnet, daß die Durcharbeitungsmittel (112) in zwei verschiedene Teile bezüglich der Längssymmetrieebene getrennt, geteilt sind und jeweils vor jedem der rückwärtigen Räder angeordnet sind, wobei sie zwischen diesen einen nicht bearbeiteten Raum aussparen, um zwei Gebietsstreifen zu bearbeiten, die dazu bestimmt sind, anschließend durch die Räder überfahren zu werden.

14. Streuer nach einem der Ansprüche 1 bis 13, dadurch gekennzeichnet, daß er ferner Abschermittel (111) für das Gebiet aufweist, die vor der Dosiervorrichtung (106) angeordnet sind, um das Gebiet vor dem Ausstreuen des Produktes aufzulockern; diese Abschermittel, die an dem Rahmen (103) mittels Reguliermitteln (110) für die Höhe bezüglich des Bodens befestigt sind, unabhängig von anderen Reguliermitteln für die Höhe des Silos (105) und der Durcharbeitungsmittel (112) arbeiten können.

15. Streuer nach Anspruch 14, dadurch gekennzeichnet, daß die Abschermittel (111) mit einem autonomen Motor versehen sind, welcher es erlaubt, die Zugkraft des Streuers auf die Abschermittel zu minimieren.

16. Streuer nach einem der Ansprüche 1 bis 15, dadurch gekennzeichnet, daß er Meßmittel für das Gewicht der Gesamtheit Silo/Dosiervorrichtung (105, 106) und Bearbeitungsmittel für die durch diese Meßmittel erhaltenen Signale aufweist, um anhand der Veränderung dieses Gewichtes den auf dem Gebiet ausgebreiteten Produktfluß zu bestimmen und den Durchsatz der Dosiervorrichtung (106) zu regulieren, um eine gleichmäßige Verteilung des Produktes auf dem Gebiet zu erreichen.

17. Streuer nach Anspruch 16, dadurch gekennzeichnet, daß diese Meßmittel anhand von Öldruck in den Stellantrieben (107) arbeiten, was die Regulierung der Position des Silos (105) erlaubt.

18. Streuer nach einem der Ansprüche 1 bis 17, dadurch gekennzeichnet, daß er ferner Mittel aufweist, die das Erfassen der Position des auf dem Gebiet ausgestreuten Produktstreifens und das Regulieren der Vorschubrichtung des Streuers erlauben, um die ausgestreuten Produktstreifen aufeinander folgend einander angrenzend zu halten.

## Claims

1. Spreader for soil treatment, of the type containing a silo (105) the lower part of which forms a hopper having the form of a truncated prism whose base is upwards and whose truncated lower part is directly attached to a metering device (106) and extends, along with the metering device, over more or less the entire width of the spreader to treat the soil over more or less this entire width without pulverizing the product to be spread, characterized in that it contains a frame (103) which is open over the entire width of the spreader to receive the silo (105) and supporting means (107) to raise and lower the silo/metering device assembly vertically with respect to the soil in order to adjust the distance between the soil to be treated and the metering device in order to minimize said distance during the treatment.

2. Spreader according to Claim 1, characterised in that these supporting means of the silo/metering device assembly also enable said silo/metering device assembly to be tilted forwards and backwards.

3. Spreader according to any one of Claims 1 and 2, characterised in that these supporting means are formed from 3 or 4 jacks (107) situated at the periphery of the silo and articulated by means of trunnions or universal joints.

4. Spreader according to any one of Claims 1 to 3, characterised in that the metering device (106) is a large diameter rotor type fitted with small cells.

5. Spreader according to any one of Claims 1 to 4, characterised in that it contains means (108) for attaching the metering device to the hopper, enabling the type of metering device to be changed.

6. Spreader according to any one of Claims 1 to 5, characterised in that it contains a frame (103) which is open over the entire width of the spreader to receive the silo (105), whose transverse cross-section is constant with respect to the axis of the spreader and maximum with respect to the opening of the frame.

7. Spreader according to Claim 6, characterised in that it contains four wheels (104) able to pivot through 180 degrees, situated at the four corners of the frame (103), to widen the track, to increase the stability of the spreader, and to avoid crushing the edges of the strip of material discharged onto the soil.

8. Spreader according to any one of Claims 1 to 7, characterised in that it furthermore contains a vertical transverse and central partition (201) dividing the silo into two parts, and means (204) for controlled closing of the junction between the hopper and the metering device so as to feed the metering device via one and/or the other of the two parts of the silo.

9. Spreader according to Claim 8, characterised in that it contains two rotating metering devices (616, 626) of different diameters intended to be fed by each of the two parts of the silo, respectively, and in that the vertical central partition (201) is movable in order to delimit two unequal parts whose volumes correspond to the flow rates of the metering devices.

10. Spreader according to any one of Claims 1 to 9, characterised in that the silo (105) contains an opening able to be connected to a filter (701,702) enabling the air carried into the silo by the means for filling this silo with the treatment product to be evacuated, before the start of work; this filter being supported by a trailer (704) able to be coupled to the spreader in a towing position or in a transportation position.

11. Spreader according to any one of Claim 1 to 10, characterised in that it furthermore contains mixing means (112) situated behind the metering device (106) to provide mixing of the soil and the product spread on the soil at the front of the mixing means; these mixing means being attached to the frame (103) by means (108) for adjusting their height with respect to the soil.

12. Spreader according to Claim 11, characterised in that it furthermore contains two casings (309, 319) enclosing the mixing means (112) and the metering device, respectively, and containing openings (301, 311) fitting together one within the other in the operating position to provide sealing of the assembly.

13. Spreader according to any one of Claims 11 and 12, characterised in that the mixing means (112) are divided into two separate parts with respect to the longitudinal plane of symmetry, separated and situated in front of each of the rear wheels, respectively, making a non-mixed space between them, to mix two strips of soil intended then to be crushed by these wheels.

14. Spreader according to any one of Claims 1 to 13, characterised in that it furthermore contains soil shearing means (111) situated in front of the metering device (106) to loosen the soil prior to the spreading of the product; these shearing means being attached to the frame (103) by means (110) for adjusting their height with respect to the soil, being able to operate independently of the other means for adjusting the heights of the silo (105) and of the mixing means (112).

15. Spreader according to Claim 14, characterised in that these shearing means (111) are fitted with an independent motor enabling the tensile stress of the spreader on the shearing means to be minimized.

16. Spreader according to any one of Claims 1 to 15, characterised in that it furthermore contains means for measuring the weight of the silo/metering device assembly (105, 106) and means for processing the signals obtained by these measuring means, in order to determine from the variation in this weight the flow of the product spread on the soil and to control the flow rate of the metering device (106) in order to obtain a uniform distribution of the product on the soil.

17. Spreader according to Claim 16, characterised in that these measuring means operate on the oil pressure in the jacks (107), enabling the position of the silo (105) to be adjusted.

18. Spreader according to any one of Claims 1 to 17, characterised in that it furthermore contains means enabling the position of the strip of product spread on the soil to be detected and the direction of advance of the spreader to be controlled to maintain the successive strips of spread product contiguous with each other.
